# EUROPEAN PATENT SPECIFICATION

(11) **EP 2 505 027 B1**
(45) Date of publication and mention of the grant of the patent: **30.10.2013**
(21) Application number: 09851515.8
(22) Date of filing: 23.11.2009
(51) Int. Cl.: H04W 68/04, H04L 12/24, H04L 29/08

(54) **METHOD AND ARRANGEMENT FOR HANDLING NOTIFICATIONS IN A COMMUNICATION NETWORK**
VERFAHREN UND ANORDNUNG ZUR HANDHABUNG VON BENACHRICHTIGUNGEN IN EINEM KOMMUNIKATIONSNETZWERK
PROCÉDÉ ET SYSTÈME DE GESTION D'AVERTISSEMENTS DANS UN RÉSEAU DE COMMUNICATION

(43) Date of publication of application: 03.10.2012
(73) Proprietor: Telefonaktiebolaget L M Ericsson (PUBL), 164 83 Stockholm (SE)
(72) Inventor: BOBERG, Christer, S-137 55 Tungelsta (SE); KLEIN, Mikael, S-141 69 Huddinge (SE); LASSBORN, Sofie, S-112 62 Stockholm (SE); LINDGREN, Anders, S-125 74 Älvsjö (SE); NORHAMMAR, Björn, S-182 74 Stocksund (SE)
(74) Representative: Sjöberg, Mats Hakan
(86) International application number: PCT/SE2009/051317
(87) International publication number: WO 2011/062531

(56) References cited:
- WO-A1-03/041429
- WO-A2-2009/001333
- US-A1- 2003 087 649
- US-A1- 2005 038 876
- US-A1- 2005 080 857
- US-A1- 2008 235 349
- US-A1- 2009 161 573

## Description

### TECHNICAL FIELD

The claimed invention refers generally to a method and arrangement which enables notifications to be handled more efficiently in a communication network.

### BACKGROUND

Distribution of user specific information between users of a communication network via notifications of an efficient delivery mechanism, is commonly used in association with applications such as Presence. The IP Multimedia Subsystem (IMS), which is a system which supports Presence applies a notification scheme which is static in the sense that either the same notification rate is used for all resources, or users, for which Presence is to be applied, or a specific notification rate has been determined in advance for one or more resources. For a presence solution, such as e.g. Rich Communication Suite (RCS), which is a concept focused on the use of IMS (IP Multimedia Subsystem) for providing mobile phone communication services, there may be hundreds of address book contacts to handle and today it is necessary to manually determine for which of these you want to receive presence notifications. See, for example, document WO-A-2009/001333.

To determine for which of these it is required to receive presence notifications is a time consuming task. Sometime it is also possible to determine the rate to be applied. Both these tasks do however have to be handled manually. If all resources where to be presence enabled, this would most likely generate to much traffic for the operator to cope with. Besides, the resources of interest will typically change from time to time, and in order to adapt to these changes, changes on how to notify the resources will have to be done manually.

### SUMMARY

It is an object of the invention to address at least some of the problems outlined above. It is also an object to provide a mechanism for determining and applying differentiated notification rates for different resources, where such a differentiation is based on traffic statistics.

According to different aspects, a method and a notifier suitable for performing the suggested method is provided.

In one aspect, a method to be executed at a notifier of a communication system for handling notifications, at least partly according to a notification scheme of the notifier, is provided.

The method is adapted such that it is provisioning for a differentiated distribution rate to be applied together with the notification scheme when notifications received from a notification source function, and associated with the subscriber, are to be distributed. The suggested provisioning is being based on user traffic statistics on traffic involving a registered subscriber, and which has been generated in the communication network, where the statistics is statistics that has been acquired from a statistics server and accumulated by the notifier.

According to one embodiment, the differentiated distribution rate may be determined by the notifier.

More specifically, the provisioning may comprise the further step of postponing a notification associated with the subscriber by buffering the notification, according to the distribution rate applied for the subscriber.

According to another alternative embodiment the provisioning is based on selectively adaptation of throttle values. In comparison to the former embodiment, the differentiation of the notifications is performed at a notification source function.

On the basis of accumulated user traffic statistics associated with the subscriber, a user traffic dependent throttle value associated with the subscriber is adapted at a notifier. The throttle value is then transmitted to the notification source function, which can apply the differentiated distribution rate on notifications destined for the subscriber, on the basis of the updated throttle value.

The distribution rate may also be differentiated even further by applying a filter, which may be based on acquired user traffic statistics.

In another aspect, a notifier for handling notifications, at least partly according to a notification scheme, is provided. The notifier is been adapted to perform the method described above, and therefore it is provided with a notification unit, which is adapted to provision for a differentiated distribution rate to be applied together with the notification scheme when it is distributing notifications which are received from a notification source function and associated with said subscriber. The provisioning is being performed on the basis of user traffic statistics involving a registered subscriber, considering traffic which has been generated in the communication network. The notifier also comprises a statistics unit adapted to acquire the user traffic statistics, such that it can be obtained and used by the notification unit.

According to one embodiment, the notification unit is adapted to distribute the notifications on the basis of the differentiated distribution rate.

The notifier may also comprise a buffer which is adapted to be used for postponing distribution of notifications, according to the applied differentiated distribution rate.

The notification unit may also be adapted to provide an even more efficient distribution process by applying
polling for notifications destined for the notifier. According to another embodiment, the notification unit is adapted to adapt, on the basis of accumulated user traffic statistics associated with the subscriber, a user traffic dependent throttle value associated with the subscriber, and to transmit the throttle value to the notification source function via a first communication unit. By providing the updated throttle value to the notification source function the differentiated distribution rate can be applied by the notification source function for notifications destined for the subscriber, on the basis of said throttle value.

The notification unit may be adapted to adapt the throttle value such that it is increased in case the amount of user traffic involving said subscriber has increased more than a pre-defined throttle threshold, and such that it is decreased in case the amount of user traffic involving said subscriber has decreased more than a pre-defined throttle threshold.

In addition the notification unit may be further adapted to differentiate the distribution rate by applying a filter, which may be based on acquired user traffic statistics. Thereby, notifications associated with one or more subgroups of users may be distributed according to different distribution rates.

According to one exemplary embodiment, the notifier may be a Resource List Server (RSL).

The notifier may also be configured as an integrated part of a notification source function. If the notifications are distributed within a presence related system the notification source function may be a Presence Server. Thereby, the suggested differentiation functionality may be configured as an integrated part of an entity configured for handling notifications.

In yet another aspect, a notification source function especially adapted for distributing notifications to a notifier is applied, where the notification source function comprise a processing unit which is adapted to apply, on the basis of a throttle value associated with a registered subscriber, a differentiated distribution rate when distributing notifications associated with said subscriber to the notifier. The throttle value, which is based on user traffic statistics on user traffic involving the subscriber, is acquired from the notifier.

The notification source function may typically also comprise a buffer, which is adapted to postpone notifications associated with the subscriber, according to a respective throttle value.

The suggested mechanism provides an automated process for handling notifications, such that distribution of the notifications may be executed with higher efficieny.

In addition, differentiation of the notification rates also allows users to selectively prioritize certain notifications.

If a presence service is applied the notification source function may be configured as a part of a Presence Server. In addition, the notification source function may be configured as an integrated part of the notifier.

### BRIEF DESCRIPTION OF THE DRAWINGS

The invention will now be described in more detail by means of exemplary embodiments and with reference to the accompanying drawings, in which:
- Figure 1 is a simplified network architecture of a communication network which enables distribution of notifications.
- Figure 2a is a simplified network architecture which illustrates how notifications may be distributed at differentiated distribution rates, according to one embodiment.
- Figure 2b is another simplified network architecture which illustrates another way for enabling notifications to be distributed at differentiated distribution rates, according to another embodiment.
- Figure 3 is a simplified block scheme illustrating a notifier according to one exemplified embodiment.
- Figure 4 is another simplified block scheme illustrating a Notification Source Function, which may be configured according to two alternative embodiments.
- Figure 5 is an illustration of a typical Presence scenario, where differentiated distribution rates are applied.
- Figure 6a is a flow chart illustrating a method of a notifier according to one embodiment.
- Figure 6b is a flow chart illustrating a method of a notifier according to another embodiment.

### DETAILED DESCRIPTION

The claimed invention refers to an automated mechanism which enables a network node, from hereinafter referred to as a notifier, participating in the distribution of notifications in a communication network, to provision for notifications to be forwarded to at least some subscribing users at a differentiated distribution rate. Subscribing user or subscriber is to be referred to as a user having access to a communication network via a User equipment (UE) and being a subscriber of a notification service which provides for notifications to be notified at a differentiated distribution rate, as an alternative to notify only on the basis of a notification scheme.

The suggested automated mechanism is configured to obtain differentiated distribution rates on the basis of user traffic statistics on user traffic associated with a subscriber that is a registered user, or subscriber, of such a service, where as a result of the suggested provisioning a method for enabling differentiated distribution rates is performed either completely by the notifier, or as a combination of steps executed both by the notifier and an interconnected notification source function, where the notification source function is a function which is adapted to provide notifications to the notifier.

A Notification is to be referred to as a message, carrying any kind of information associated with a specific user, wherein the message is distributed to one or more users which are subscribing for such updated information, according to a pre-defined notification scheme. The notification scheme have been specified by a user, may be based on a set of preconfigured rules, or may be based on a combination of both.

According to the suggested mechanism, the notifier is adapted to provide for a differentiated distribution rate, such that a notification is either distributed in real time, or delayed to a certain extent. A differentiated distribution rate may be applied for all users which are handled by the notifier, or for a limited group of users, where in the latter case the users for which no differentiated distribution rate is to be applied may be notified in a conventional, undifferentiated manner.

A differentiated distribution rate may also be applied dynamically, e.g. on the basis of the current load of the notifier, and/or on the basis of the user, such that notifications originating from users which are of less interest to a specific user, subscribing for notifications are handled by applying a differentiated distribution rate. By choosing to limit the rate of notifications of less interest, the overall notification traffic destined to a specific subscribing user may be optimized. In addition, by applying differentiated distribution rates more desired notifications may be prioritized in favor of less desired notifications.

In a typical scenario, the described notification distribution mechanism may result in a higher notification rate, i.e. with a low delay, or even with no delay at all, for users involved in a high degree of communication with a subscribing user, while notifications from more sporadic users may be distributed at a lower rate, such as e.g. once per day, or once every third day.

During distribution of notifications from the notifier, delayed notifications may be aggregated together with non-delayed notifications, but typically notifications are concatenated, such that notifications being exposed with the same delay belong to the same priority group, and such that concatenated notifications belonging to one group are distributed from the notifier as one single notification. Thereby the notification traffic may be reduced even further.

The way user traffic is collected or acquired from the communication network is out of the scope of the present application, since there are presently a plurality of ways available for extracting such information, and for that reason, the procedure for executing this process will not be discussed any further detail in this document. In general terms, a network node, such as e.g. an Application Server (AS), may e.g. be adapted to collect user traffic statistics, e.g. by a plurality of sniffers, distributed over the communication network.

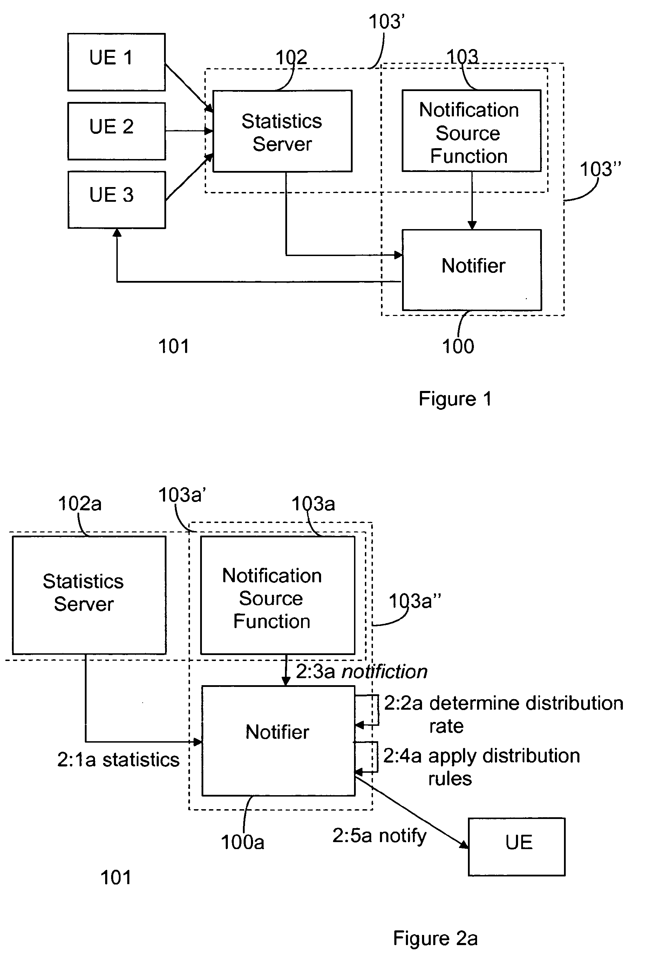

A simplified exemplifying system, suitable for applying the suggested notification distributing mechanism suggested above will now be described below with reference to figure 1.

According to figure 1, a notifier 100 of a communication network 101 is connected to a notification source function 103, from which it is adapted to receive notifications, for further distribution to one or more users via their respective User Equipment (UE),UE 1, UE 2, UE 3, each of which is registered to a user which is a subscriber of notification service. The notifier 100 is also adapted to receive user traffic statistics on user traffic involving subscribing users. In the present context user traffic is to be interpreted as disclosing network based connections, such as e.g. telephone calls, and initiated network based services, such as e.g. SMS's, MMS's, and notifications. The acquired user traffic statistics may comprise statistics on connections and services involving at least two subscribing users and may in its simplest form comprise statistics on the number of calls and/or services the users have been involved in during a certain time interval. The user traffic statistics may, however, also comprise statistics which takes e.g. duration of calls, time of the day and/or location when making calls or using a service into consideration.

User traffic statistics is typically provided from a dedicated network node 102 especially adapted for this purpose. Network node 102, will from hereinafter be referred to as a statistics server.

The notification source function 103 may be configured as a standalone entity, as in figure 1, e.g. constituting a server, but may also be configured as an integrated part of statistics server 102, constituting the combined statistics server/notification source function 103'. Alternatively, the notification source function may be an integrated part of a notifier, thereby forming part of a combined notifier/notification source function 103".

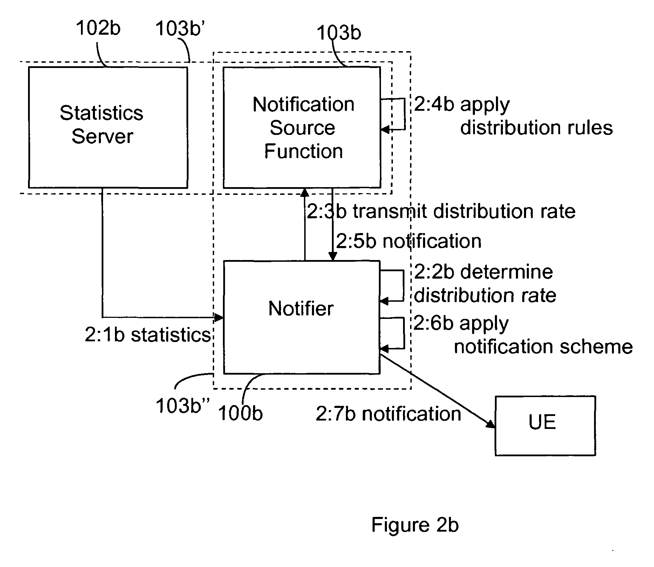

The suggested distribution mechanism will now be described in further detail according to two alternative embodiments, with reference to figure 2a and 2b, respectively. Figure 2a describes a simplified scenario, according to a first embodiment, where a notifier 100a is adapted to apply a differentiated distribution rate on notifications received from a notification source function 103a, or a combined notification source function 103a', 103a", on the basis of user traffic statistics, acquired from a statistics server 102a.

In a first step 2:1a, user traffic statistics associated with at least one subscribing user is provided to, and stored by, notifier 100a. The collected user traffic statistics may typically comprise user traffic statistics associated with users which have actively registered to approve with the described collecting of user traffic, in order to enable one or more associated services, provided by the network provider.

It is to be understood that the user traffic statistics is typically provided from the statistics server 102a to the notifier 100a in a process which is independent from the described notification process, such that updated statistics may be provided to the notifier 100a on a more or less frequent basis, such as e.g. at predefined time intervals and/or depending on the amount of user traffic generated in the communication network 101, and/or amount of notifications received.

In a next step 2:2a a distribution rate to be applied is determined on the basis of the stored user traffic statistics. During this step, a differentiated distribution rate may be applied for some users, while conventional distribution procedures may be applied for other users. As mentioned above differentiated distribution rate may also be applied only under certain conditions, such as e.g. certain times of the day, or depending on the load of the communications network.

Once a notification is receive from the notification source function 103a, 103a',103a" as indicated with another step 2:3a, the relevant distribution rate is applied for the notification, according to a further step 2:4a. In the latter step the notification may either be handled according to conventional notification procedures, i.e. according to the applicable notification scheme, or it will be handled according to a differentiated distribution rate, depending on the settings specified in the previous step 2:2a. In a final step 2:5a, the notification is notified to a UE, UE A, of the destined user.

In a final step 2:5a, the notification is distributed, or notified, to one or more UE's, either immediately, or subsequent to a specified delay.

Figure 2b describes another scenario, where a differentiated distribution rate can be determined in a notifier 100b, according to user traffic statistics associate with a user. However, according to the embodiment of figure 2b, the differentiated distribution rate is applied at the notification source function 103b, from which notifications are provided. This is achieved by providing information on a required differentiated distribution rate which has been determined by the notifier 100b to the notification source, typically on a more or less frequent basis, where a differentiated distribution rate may be applied on notifications, destined for registered subscribers. Also in this scenario the notification source function 103b' may be configured as an integrated part of a statistics server 102b, or the notification source function 103b" may be combined with the notifier 100b.

For each notification for which a differentiated distribution rate is to be applied, the notification is provided to the notifier 100b, according to a respective, specified distribution rate, i.e. any delay that may be required according to the applicable rules, will be executed at the notification source function 103b, 103b',103b", while the notifier 100b will handle notifications received from the notification source function 103b, 103b',103b" in a conventional manner, on the basis of the notification scheme.

In a first step 2:1b of figure 2b, user traffic statistics, associated with at least one registered user is provided to, and stored at, notifier 100b. At notifier 100b a distribution rate is then determined for the registered users on the basis of the user traffic statistics, as indicated with a subsequent step 2:2b. These steps are executed in a similar manner as was the case for the previous embodiment.

A differentiated distribution rate which is applied at the notification source function 103b, 103b',103b" may typically be applied by specifying and using different user specific variables, such as e.g. throttle values, where for each registered user, there exist an associated throttle, for which a throttle value is dedicated on the basis of the applicable rules and the associated user traffic statistics. A respective throttle value is then updated at a predefine frequency, such that for a registered user for which the associated stored user traffic statistics indicates that a change has occurred, the respective throttle value is updated accordingly by the notifier 100b and forwarded to the notification source function 103b, 103b'103b". Such an update is transmitted to notification source function 103b, 103b',103b" as indicated with a step 2:3b.

In a typical scenario a throttle value may e.g. be increased proportionally to an increase in the amount of user traffic involving a respective user. Once updated, the recently created, or updated, throttle value is transmitted to the notification source function 103b, 103b', 103b" where a differentiated distribution rate may now be applied for one or more users for any subsequent notifications, as indicated with a next step 2:4b. The notification is provided to notifier 100b, after having been delayed, according to a differentiated rate, all according the applicable rules, as indicated with a next step 2:5b. Notifier 100b, then applies a conventional notification scheme when handling the received notification, as indicated with another step 2:6b, after which the notification is distributed, or notified, to a respective UE, as indicated with a final step 2:7b.

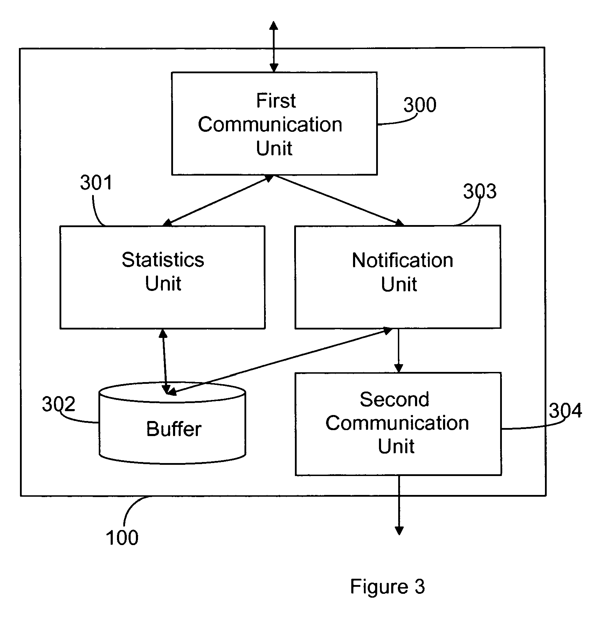

A notifier which is suitable for applying a differentiated distribution mechanism according to any of the embodiments suggested above will now be described in further detail with reference to figure 3 according to one exemplifying embodiment. The suggested notifier 100, 100a,100b being part of a communication network, comprises a first communication unit 300, which is adapted to receive user traffic statistics, collected from user traffic connections of the communication network from a statistics application server (not shown). The first communication unit 300 is connected to a unit, in the present example referred to as a statistics unit 301, which is adapted to accumulate and store received statistics in a buffer 302, possibly in combination with processing the statistics, according to any pre-define rules which are specifying how a differentiated rate is to be applied. The notifier 100,100a,100b also comprises a notification unit 303, which is adapted to provision for a notification distribution rate to be applied together with a notification scheme for notifications received from a notification source function 103b, 103b'103b", on the basis of associated, user traffic statistics, obtained from buffer 302. The notification unit 303 is typically adapted to acquire updated user traffic statistics at a pre-determined time interval.

As indicated above, notification unit 303 may, according to a first embodiment, be configured to determine a notification rate to be applied for a notification received via first communication unit 300, simply by using accumulated, associated user traffic statistics from buffer 302, on the basis of pre-defined rules. According to the first embodiment, received notifications may either be handled according to conventional procedures, i.e. without any delay, or delayed, according to associated user traffic statistics in combination with the pre-defined rules.

The notification unit may also be adapted to apply polling instead of pushing for notifications provided from the notification source function, in situations with low distribution rate. This may be applied e.g. by applying polling when the overall distribution rate for the notifier is lower than a predefined threshold.

According to another embodiment, notification unit 303 may instead be adapted to provide for different distribution rates by adapting a throttle value, or any other corresponding parameter, in response to recognizing a change in the user traffic statistics associated with the respective user. For this purpose a threshold, which may be referred to as a throttle threshold, may be applied.

The notification unit 303 is adapted to transmit an updated value, e.g. a throttle value, indicating a required notification rate, to the notification source function via the first communication unit 300. The updated throttle values/parameters enables the notification source function to apply differentiated distribution rates on notifications associated with users for which this mechanism is to be applied, on such notifications, provided to the notifier 100,100a,100b, will then be treated in a conventional manner by the notifier.

Since any differentiated distribution rate has already been handled by the notification source function 103b, 103b', 103b" the notification unit 303 is adapted to handle received notifications, according to conventional notification procedures, i.e. on the basis of a specified notification scheme. Consequently, a notification will be handled according to the notification scheme after having been processed, according to the suggested differentiated rate mechanism, or in combination with applying such a scheme. Notifier 100,100a ,100b also comprises a second communication unit 304, which is adapted to distribute, or notify, notifications to one or more users, according to conventional procedures.

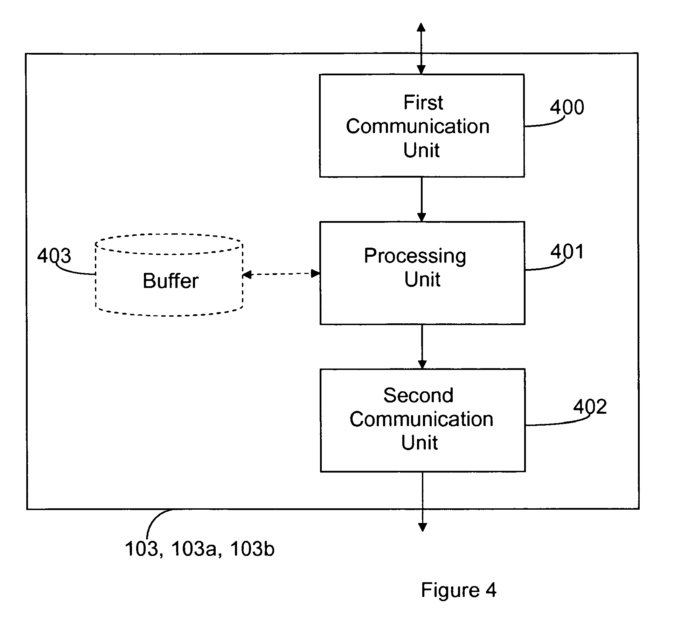

A notification source function 103 according to two alternative embodiments will now be described below with reference to figure 4.

A notification source function 103 comprise a first communication unit 400 adapted to receive notifications, a processing unit 401, adapted to process received notifications, and a second communication unit 402, adapted to communicate with a notifier (not shown). A processing unit 401 of a notification source function 103, which is adapted to perform the method according to figure 2a, may typically be configured to handle notifications according to conventional procedures of a presence server, and, thus in such a scenario, the notification source function may form part of a conventional presence server, alternatively, integrated with a notifier.

If instead the notification source function is configured to perform the method according to the second embodiment, described with reference to figure 2b, the notification source function will also be provided with a buffer 403, for delaying, or postponing, notifications, according to updated throttle values. In case of the latter scenario, the processing unit 401 will be adapted to store the throttle values and the rules to be applicable for obtaining the required differentiated distribution scheme.

The notification unit described above, as well as the method steps, described according to two alternative embodiments, may typically be applied in a communication network which is providing Presence services, such as e.g. IMS Presence services.

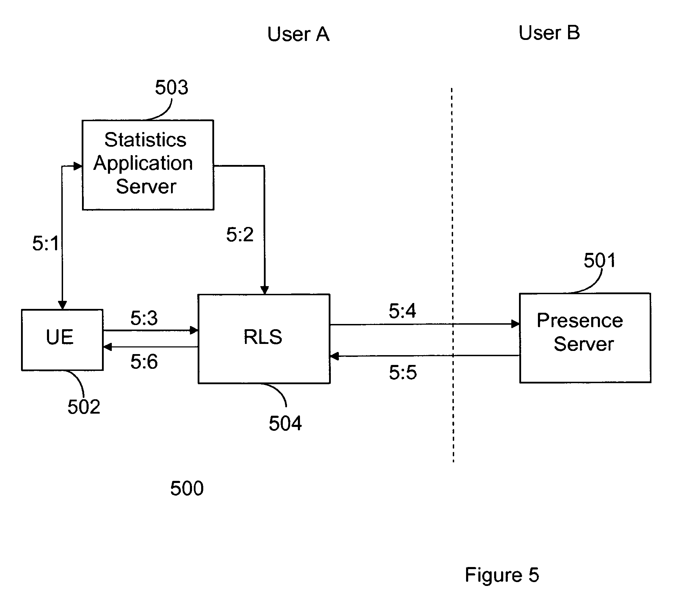

A typical Presence scenario, will therefore be now be described with reference to figure 5. In such a scenario, the notifier will typically configured as a device, comprising conventional RLS functionality which has been adapted with additional rate differentiation functionality, as suggested above.

According to figure 5, a user, user A have access to Presence services, provided via a presence server 501, comprising the notification source functionality described above.

In a first step 5:1, a Statistics Application Server, 503, or any other functional node, adapted to acquire user traffic related data from UE's, is collecting user traffic related data associated with UE 502, and processes the data, such that user traffic statistics is obtained. The statistics information is being published to an RLS 504 in a next step 5:2. Alternatively, the publish process may be executed via another presence server, connected between the statistics application server 503 and the RLS 504. As already indicated above, user traffic statistics will then typically be continuously updated and aggregated.

User A, which in the present context is typically referred to as a Watcher, may subscribe for notifications, associated with a number of users, or resources, typically also referred to as Presentities, by transmitting a single SUBSCRIBE request to RLS 504, via UE 502. RLS 504 thereby receives a SUBSCRIBE request for a list of users from UE 502, and user A, as indicated with another step 5:3. The RLS 504 processes the list, according to the SUBSCRIBE request and generates an individual subscription for each resource in the list, as exemplified with the subscription, sent to Presence Server 501, which is supporting another user, user B, as indicated with another step 5:4. In a next step 5:5, a notification is received by RLS 504, and RLS, being adapted to apply the suggested differentiated distribution rate mechanism according to the first embodiment described above, forwards the notification to UE 502, either in a convention manner, according to a relevant notification scheme, or according to a scheme, specified according to the differentiated distribution rate mechanism. A distribution to UE 502 is illustrated with a final step 5:6. Alternatively, presence server 501 may comprise notification source functionality which is adapted to apply a differentiated distribution rate at the application server, according to the second embodiment.

If instead the second embodiment described above is to be applied, the notification provided to RLS 502 in step 5:5 has already been exposed with the differentiated distribution rate mechanism in Presence Server 501, and the notification will be processed by the RLS 504 according to conventional procedures, before it is distributed to UE 502, in step 5:6.

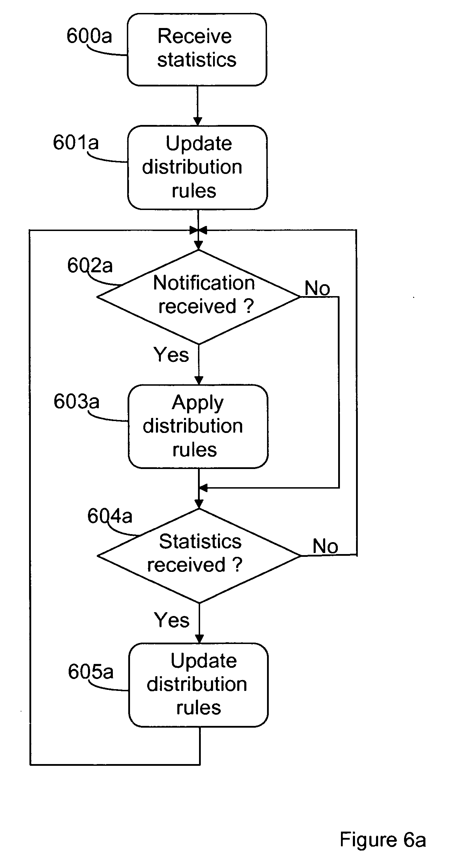

Figure 6a is an illustration of the method steps to be executed at a notifier when a differentiated distribution rate is applied at the notifier. As a prerequisite it is to be understood that user traffic statistics is obtained by and updated at the notifier at a more or less frequent basis, such that the distribution rates can be updated at the notifier.

In a first step 600a of figure 6a, user traffic statistics is received from a statistics server, and in a next step 601a the acquired statistics is used as a basis for determining distribution rules and the rates to be applied by the for subscribing users, such that either a differentiated distribution rate is applied for a subscribing user, or notifications for a subscribing user are set to be handled in a conventional way. Once a differentiated distribution rate has been set for all subscribing users for which this option is to be applied, a notification which is received from a notification source function, as indicated with a next step 602b, will be handled on the basis of the specified distribution rules, i.e. the notification scheme applicable for the notifier will be applied in combination with any differentiated distribution rates which may be applicable for the notification, as indicated with a step 603a. Depending on the applicable rules, the notification is thus transmitted either according to the notification scheme alone or after a delay, if a differentiated distribution rate is applied. The described procedure then continues by receiving updated user traffic statistics, as indicated with a step 605a, and by updating the distribution rules, or more specifically, the differentiated distribution rates which are applied by the rules, according to relevant time intervals, as indicated with another step 606a.

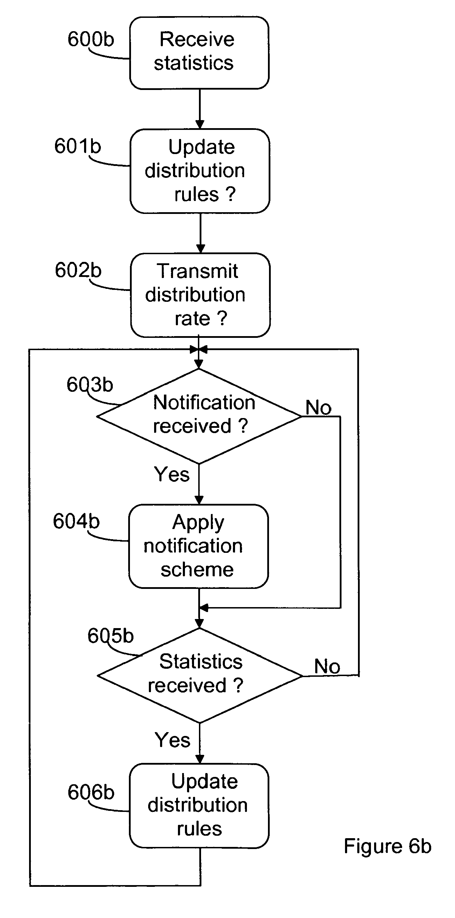

Figure 6b illustrates another, alternative method, where the actual differentiation is performed by a notification source function instead of by the notifier. Also in this scenario user traffic statistics is continuously updated and used for setting up the rules for how to notify users. This process is illustrated with steps 600b and 601b. According to this method an updated distribution rate then transmitted to the notification source function for updating, as indicated with a subsequent step 602b.

In a next step 603b a notification is received from the notification source function, and in another step 604b the respective notification rules are applied in a conventional manner, i.e. according to the applicable notification scheme.

New user traffic statistics received in another step 605b is used for updating of the distribution rules, as indicated with a step 606b, and transmitted to the notification source function in another step 607b. Once updated, the notification source function will be able to apply the applicable distribution rate for notifications, such that, in case a notification is to be delayed, it will now be delayed by the notification source function instead of by the notifier.

While the suggested notification concept has been described with reference to specific exemplary embodiments, the description is generally only intended to illustrate the inventive concept and should not be taken as limiting the scope of the invention. The invention is defined by the appended claims.

### ABBREVIATIONS

- AS: Application Server
- IMS: IP Multimedia Subsystem
- MMS: Multimedia Messaging Service
- RCS: Rich Communication Suite
- RLS: Resource List Server
- SMS: Short Message Service

## Claims

1. A method at a notifier of a communication system for handling notifications, at least partly according to a notification scheme, said method comprising:
- provisioning, for a differentiated distribution rate to be applied together with the notification scheme when distributing notifications received from a notification source function and associated with said subscriber,
said provisioning being based on user traffic statistics on user traffic which traffic has been generated in said communication network and which is involving a registered subscriber, and which user traffic statistics has been acquired from a statistics server and accumulated by the notifier.

2. A method according to claim 1, wherein the accumulation is repeated at a pre-determined time interval.

3. A method according to claim 1 or 2, wherein the differentiated distribution rate is determined by said notifier.

4. A method according to claim 1, 2 or 3, wherein the provisioning comprises the further step of postponing a notification associated with said subscriber by buffering said notification, according to the distribution rate applied for said subscriber.

5. A method according to claim 1, 2, 3 or 4, comprising the further step of applying polling for notifications destined for said notifier, in case the distribution rate for said notifier is lower than a pre-defined threshold.

6. A method according to claim 1 or 2, wherein the provisioning comprises the steps of:
- adapting, on the basis of accumulated user traffic statistics associated with said subscriber, a user traffic dependent throttle value associated with said subscriber, and
- transmitting said throttle value to the notification source function, thereby enabling the notification source function to apply the differentiated distribution rate on notifications destined for said subscriber, on the basis of the throttle value.

7. A method according to claim 6, wherein said throttle value is adapted, such that it is increased in case the amount of user traffic involving said subscriber has increased more than a pre-defined throttle threshold, while it is decreased in case the amount of user traffic involving said subscriber has decreased more than a pre-defined throttle threshold.

8. A method according to any of claims 1-7, comprising the step of further differentiating the distribution rate by applying a filter, which is based on acquired user traffic statistics.

9. A notifier of a communication system for handling notifications, at least partly according to a notification scheme, said notifier comprising:
- a notification unit adapted to provision for a differentiated distribution rate to be applied together with the notification scheme when distributing notifications received from a notification source function and associated with said subscriber, and
- a statistics unit adapted to acquire said user traffic statistics,
said provisioning being performed on the basis of user traffic statistics involving a registered subscriber, which traffic has been generated in said communication network.

10. A notifier according to claim 9, wherein the notification unit is adapted to repeat said acquiring of statistics at a pre-determined time interval.

11. A notifier according to claim 9 or 10, wherein the notification unit is adapted to distribute said notifications on the basis of the differentiated distribution rate.

12. A notifier according to claim 9, 10 or 11, further comprising a buffer, adapted to postpone distribution of notifications according to the applied differentiated distribution rate.

13. A notification source function of a communication system for distributing notifications to a notifier, said notification source function comprising:
- a processing unit adapted to apply, on the basis of a throttle value associated with a registered subscriber, a differentiated distribution rate when distributing notifications associated with said subscriber to said notifier, said throttle value being based on user traffic statistics on user traffic involving said subscriber being acquired from said notifier.

14. A notification source function according to claim 13, further comprising a buffer, adapted to postpone notifications associated with said subscriber according to said throttle value.

15. A notification source function according to claim 13 or 14, wherein the notification source function is configured as a part of a Presence Server.

## Patentansprüche

1. Verfahren an einem Benachrichtiger eines Kommunikationssystems, um Benachrichtigungen mindestens teilweise gemäß einem Benachrichtigungsschema zu handhaben, wobei das Verfahren umfasst:
- Bereitstellung, um eine differenzierte Verteilungsrate zusammen mit dem Benachrichtigungsschema anzuwenden, wenn Benachrichtigungen verteilt werden, die von einer Benachrichtigungsquellfunktion empfangen werden und mit dem Teilnehmer assoziiert sind,
wobei die Bereitstellung auf Benutzerverkehrsstatistik über Benutzerverkehr basiert, welcher Verkehr im Kommunikationsnetz generiert wurde und an dem ein registrierter Teilnehmer beteiligt ist, und welche Benutzerverkehrsstatistik von einem Statistikserver akquiriert und vom Benachrichtiger akkumuliert wurde.

2. Verfahren nach Anspruch 1, worin die Akkumulation an einem vorgegebenen Zeitintervall wiederholt wird.

3. Verfahren nach Anspruch 1 oder 2, worin die differenzierte Verteilungsrate vom Benachrichtiger bestimmt wird.

4. Verfahren nach Anspruch 1, 2 oder 3, worin die Bereitstellung den weiteren Schritt des Aufschiebens einer mit dem Teilnehmer assoziierten Benachrichtigung umfasst, indem die Benachrichtigung gemäß der für den Teilnehmer angewendeten Verteilungsrate gepuffert wird.

5. Verfahren nach Anspruch 1, 2, 3 oder 4, außerdem den weiteren Schritt des Anwendens von Polling für Benachrichtigungen umfassend, die für den Benachrichtiger bestimmt sind, falls die Verteilungsrate für den Benachrichtiger niedriger ist als eine vordefinierte Schwelle.

6. Verfahren nach Anspruch 1 oder 2, worin die Bereitstellung folgende Schritte umfasst:
- auf der Basis von mit dem Teilnehmer assoziierter akkumulierter Benutzerverkehrsstatistik einen vom Benutzerverkehr abhängigen Drosselwert anpassen, der mit dem Teilnehmer assoziiert ist, und
- Übertragen des Drosselwerts an die Benachrichtigungsquellfunktion, wodurch der Benachrichtigungsquellfunktion ermöglicht wird, die differenzierte Verteilungsrate auf der Basis des Drosselwerts auf Benachrichtigungen anzuwenden, die für den Teilnehmer bestimmt sind.

7. Verfahren nach Anspruch 6, worin der Drosselwert so angepasst ist, dass er erhöht wird, falls die Menge des Benutzerverkehrs, an dem der Teilnehmer beteiligt ist, um mehr als eine vordefinierte Drosselschwelle angestiegen ist, während er reduziert wird, falls die Menge des Benutzerverkehrs, an dem der Teilnehmer beteiligt ist, um mehr als eine vordefinierte Drosselschwelle gefallen ist.

8. Verfahren nach einem der Ansprüche 1 - 7, den Schritt des weiteren Differenzierens der Verteilungsrate umfassend, indem ein Filter angewendet wird, das auf akquirierter Benutzerverkehrsstatistik basiert.

9. Benachrichtiger eines Kommunikationssystems, um Benachrichtigungen mindestens teilweise gemäß einem Benachrichtigungsschema zu handhaben, wobei der Benachrichtiger umfasst:
- eine Benachrichtigungseinheit, angepasst zur Bereitstellung für die Anwendung einer differenzierten Verteilungsrate zusammen mit dem Benachrichtigungsschema, wenn Benachrichtigungen verteilt werden, die von einer Benachrichtigungsquellfunktion empfangen werden und mit dem Teilnehmer assoziiert sind, und
- eine Statistikeinheit, angepasst zum Akquirieren der Benutzerverkehrsstatistik,
wobei die Bereitstellung auf der Basis von Benutzerverkehrsstatistik ausgeführt wird, an der ein registrierter Teilnehmer beteiligt ist, welcher Verkehr im Kommunikationsnetz generiert wurde.

10. Benachrichtiger nach Anspruch 9, worin die Benachrichtigungseinheit dazu angepasst ist, das Akquirieren von Statistik an einem vorgegebenen Zeitintervall zu wiederholen.

11. Benachrichtiger nach Anspruch 9 oder 10, worin die Benachrichtigungseinheit dazu angepasst ist, die Benachrichtigungen auf der Basis der differenzierten Verteilungsrate zu verteilen.

12. Benachrichtiger nach Anspruch 9, 10 oder 11, außerdem einen Puffer umfassend, der dazu angepasst ist, die Verteilung von Benachrichtigungen gemäß der angewendeten differenzierten Verteilungsrate aufzuschieben.

13. Benachrichtigungsquellfunktion eines Kommunikationssystems zum Verteilen von Benachrichtigungen an einen Benachrichtiger, wobei die Benachrichtigungsquellfunktion umfasst:
- eine Verarbeitungseinheit, dazu angepasst, auf der Basis eines mit einem registrierten Teilnehmer assoziierten Drosselwerts eine differenzierte Verteilungsrate anzuwenden, wenn mit dem Teilnehmer assoziierte Benachrichtigungen an den Benachrichtiger verteilt werden, wobei der Drosselwert auf vom Benachrichtiger akquirierter Benutzerverkehrsstatistik über Benutzerverkehr basiert, an dem der Teilnehmer beteiligt ist.

14. Benachrichtigungsquellfunktion nach Anspruch 13, außerdem einen Puffer umfassend, der dazu angepasst ist, mit dem Teilnehmer assoziierte Benachrichtigungen gemäß dem Drosselwert aufzuschieben.

15. Benachrichtigungsquellfunktion nach Anspruch 13 oder 14, worin die Benachrichtigungsquellfunktion als ein Teil eines Anwesenheitsservers konfiguriert ist.

## Revendications

1. Procédé à un notificateur d'un système de communication pour traiter des notifications, au moins partiellement selon un schéma de notification, ledit procédé comprenant :
- le dimensionnement, pour un taux de distribution différenciée à appliquer conjointement avec le schéma de notification lors de la distribution de notifications reçues depuis une fonction de source de notification et associées audit abonné, ledit dimensionnement étant basé sur des statistiques de trafic d'utilisateur sur le trafic d'utilisateur, ledit trafic ayant été généré dans ledit réseau de communication et qui implique un abonné enregistré, et lesdites statistiques de trafic d'utilisateur ayant été acquises à partir d'un serveur de statistiques et accumulées par le notificateur.

2. Procédé selon la revendication 1, dans lequel l'accumulation est répétée à un intervalle de temps prédéterminé.

3. Procédé selon la revendication 1 ou 2, dans lequel le taux de distribution différenciée est déterminé par ledit notificateur.

4. Procédé selon la revendication 1, 2 ou 3, dans lequel le dimensionnement comprend l'autre étape de report d'une notification associée audit abonné par mise en mémoire tampon de ladite notification, en fonction du taux de distribution appliqué pour ledit abonné.

5. Procédé selon la revendication 1, 2, 3 ou 4, comprenant l'étape supplémentaire d'application d'une scrutation de notifications destinées audit notificateur, dans le cas où le taux de distribution pour ledit notificateur est inférieur à un seuil prédéfini.

6. Procédé selon la revendication 1 ou 2, dans lequel le dimensionnement comprend les étapes de :
- adaptation, sur la base de statistiques cumulées de trafic d'utilisateur associées audit abonné, d'une valeur de modulation dépendante du trafic d'utilisateur associée audit abonné, et
- transmission de ladite valeur de modulation à la fonction de source de notification, de manière à permettre la fonction de source de notification pour appliquer le taux de distribution différenciée aux notifications destinées pour ledit abonné, sur la base de la valeur de modulation.

7. Procédé selon la revendication 6, dans lequel ladite valeur de modulation est adaptée, de sorte qu'elle soit augmentée dans le cas où la quantité de trafic d'utilisateur impliquant ledit abonné a augmenté au-delà d'un seuil de modulation prédéfini, tandis qu'elle est diminuée dans le cas où la quantité de trafic d'utilisateur impliquant ledit abonné a diminué au-delà d'un seuil de modulation prédéfini.

8. Procédé selon l'une quelconque des revendications 1 à 7, comprenant l'étape supplémentaire de différenciation du taux de distribution par application d'un filtre, qui est basé sur des statistiques de trafic d'utilisateur acquises.

9. Notificateur d'un système de communication pour traiter des notifications, au moins partiellement selon un schéma de notification, ledit notificateur comprenant :
- une unité de notification adaptée pour dimensionner un taux de distribution différenciée à appliquer conjointement avec le schéma de notification lors de la distribution de notifications reçues depuis une fonction de source de notification et associées audit abonné, et
- une unité de statistiques adaptée pour acquérir lesdites statistiques de trafic d'utilisateur,
ledit dimensionnement étant effectué sur la base de statistiques de trafic d'utilisateur impliquant un abonné enregistré, ledit trafic ayant été généré dans ledit réseau de communication.

10. Notificateur selon la revendication 9, dans lequel l'unité de notification est adaptée pour répéter ladite acquisition de statistiques à un intervalle de temps prédéterminé.

11. Notificateur selon la revendication 9 ou 10, dans lequel l'unité de notification est adaptée pour distribuer lesdites notifications sur la base du taux de distribution différenciée.

12. Notificateur selon la revendication 9, 10 ou 11, comprenant en outre une mémoire tampon, adaptée pour reporter la distribution de notifications en fonction du taux de distribution différenciée appliqué.

13. Fonction de source de notification d'un système de communication pour distribuer des notifications vers un notificateur, ladite fonction de source de notification comprenant :
- une unité de traitement adaptée pour appliquer, sur la base d'une valeur de modulation associée à un abonné enregistré, un taux de distribution différenciée lors de la distribution de notifications associées audit abonné audit notificateur, ladite valeur de modulation étant basée sur des statistiques de trafic d'utilisateur sur le trafic d'utilisateur impliquant ledit abonné étant acquises à partir dudit notificateur.

14. Fonction de source de notification selon la revendication 13, comprenant en outre une mémoire tampon, adaptée pour reporter des notifications associées audit abonné en fonction de ladite valeur de modulation.

15. Fonction de source de notification selon la revendication 13 ou 14, la fonction de source de notification étant configurée comme étant une partie d'un serveur de présence.
